# EUROPEAN PATENT APPLICATION

(11) **EP 1 813 854 A1**
(43) Date of publication of application: **01.08.2007**
(21) Application number: 06001697.9
(22) Date of filing: 27.01.2006
(51) Int. Cl.: F17C 5/02, F17C 9/00, F17C 13/02

(54) **Process and arrangement for filling high pressure gas containers using a filling tube**

(71) Applicant: L'AIR LIQUIDE, Société Anonyme pour l'Etude et l'Exploitation des Procédés Georges Claude, 75007 Paris (FR); Air Liquide Deutschland GmbH, 40235 Düsseldorf (DE)
(72) Inventor: Klebe, Ulrich, 47647 Kerken (DE); Hiller, Hans, 47051 Duisburg (DE); Theissen, Friedel, 41812 Erkelenz (DE); Michel, Friedel, 40699 Erkrath (DE)
(74) Representative: Kahlhöfer, Hermann

(57) **Abstract**

The invention concerns a process, an arrangement and a gas supply station for filling high pressure gas containers comprising supplying a liquefied or solidified first gas (2) from a gas supply station (13) through a thermally isolated filling tube (14) with a moveable tube head (15) to the high pressure gas container (1); as well as a process of batch filling of high pressure gas containers (1) with gas, wherein multiple gas containers (1) are cooled in parallel, which are filled sequentially using the process according to the invention. The invention allows for fast, economical, reliable, reproducible and precise filling of high pressure gas containers, wherein a number of the known conventional devices that are not particularly suited for high pressure respectively low temperature appliances may still be used.

## Description

The invention concerns a process, an arrangement and a gas supply station for filling high pressure gas containers.

For cold filling pressure containers, according to DE 101 07 895 a filling gas is cooled before its introduction into the pressure container, wherein on completion of the filling process the pressure container is sealed in a pressure-tight manner. As the gas warms up the pressure in the pressure container rises rapidly.

According to DE 198 17 324 a fuel gas is filled into a light weight tank made with a liner of chrome nickel steel inside of a fibre reinforced shell, wherein the fuel is introduced in deep cooled liquid form and is stored at a pressure above 300 bar.

According to WO 2005/043033 a pressure vessel, for example of an airbag system, is filled with a gas or a gas mixture at a temperature which is higher than the boiling point thereof, closing the cold vessel and a pressure is produced in the filled and closed vessel by heating it to ambient temperatures.

According to WO 2005/059431 a pressure container is filled with a gas mixture, wherein a gas mixture is introduced in its gaseous state or in its liquefied state or at least one gas component of a gas mixture is introduced in its gaseous state or in its liquefied state in a cooled pressure gas container.

US 1,414,359 discloses a process for filling compressed gas containers, wherein a given quantity of liquefied gas is placed in a vessel of low specific heat capacity that is suspended within the container, the container is closed, and the walls of the container are maintained at a temperature above 0°C until the enclosed substance has been converted into gaseous form.

DE 101 19 115 discloses a pressure container particularly suited for filling with low boiling permanent gases or gas mixtures at low temperatures which is provided on its inner surface with a material having a low heat conducting coefficient.

EP 0 033 386 discloses a process for transporting and storing permanent gases, in particular hydrogen, under pressure in pressure containers, wherein the gases are cooled to low temperatures above their boiling point and are transported and stored in isolated pressure containers.

It is known, that airbags in vehicles are increasingly using new types of gas generators, which in the event of an accident inflate the airbag within a few milliseconds. High pressure gas storage systems are used as gas generators.

Three different types of gas generators are currently in use:
- Chemical generators which generate gas by reaction of a chemical solid with ambient air;
- Hybrid generators which use both a fuel solid and gas that is stored in a pressurized high pressure gas container;
- Cold gas generators that store gas in pressurized gas containers at high pressures up to 700 bar at 15°C.

The gas generators, which are filled with various gases at ambient temperatures, provide for considerable technical problems, both in terms of their production and their filling with pressures of up to 700 bar or above. The heat of compression in particular during a rapid filling leads to undefined temperature conditions which usually considerably affect the metering precision with which the amount of gas is introduced into the gas containers. To meet a high metering standard is important with respect to the subsequent inflation characteristics of the airbag. Very expensive and complex piston or diaphragm compressors are required to generate the very high pressures. This entails high investment and high maintenance costs. In addition, a correspondingly complex and expensive downstream gas supply is required for these pressures.

The known cold filling techniques avoid the problem originating from the filling of high pressures, however, these techniques usually work at extremely low temperatures which makes multiple adaptations of conventional process steps, such as the sealing of the gas container, to the low temperature conditions necessary, which is not desirable with respect investment and maintenance costs.

It is desirable that the density of the gas stored in a gas container is as high as possible, wherein the filling of the gas container should be reliable, reproducible, save and economical. The amount of gas filled into the container should be precisely metered and the throughput of gas filling facility should be as high as possible.

With respect to high temperature gas filling processes, that use high pressures above 300 bar, the known solutions to tightly connect a gas filling device with the gas container are challenging. The high pressures put high demands on safety and rigid connections and thick walled pipes are required to cope with the high pressure conditions.

With respect to the low temperature gas filling, the high pressure induced mechanical instabilities are less prominent, yet problems of thermal insulation, thermal tension and thermal expansion due to strong temperature gradients appear. In particular, the positioning of the gas containers at the gas supply station is not easy as the thermal contraction respectively expansion makes fine control of the spatial positioning system difficult.

An object of the present invention is to provide a process, an arrangement respectively a gas supply station for filling high pressure gas containers, which allow for an efficient, reproducible, reliable and precise filling of high pressure gas containers that operate fast and economical.

This and other problems are solved according to the invention by the process, the arrangement respectively gas supply station as defined in the claims below. Further advantageous embodiments and developments which can be employed individually or in any suitable combination are also provided.

According to the invention, the process for filling a high pressure gas container comprises supplying a liquefied or solidified first gas from a gas supply station through a thermally isolated filling tube with a moveable tube head to the high pressure gas container.

The filling tube is flexible as opposed to a rigid pipe. The filling tube is to be connected directly to the gas container.

The first gas may be liquefied cryogenically or may be solidified cryogenically meaning that the phase transition from the gaseous state to the liquefied respectively solidified state is performed through cooling of the first gas. The first gas may be liquefied respectively solidified by cooling it below 200°K in particular below 100°K.

The cooling of the first gas and its phase transition from the gaseous state to the liquid respectively to the solid state considerably decreases the pressure that is required to supply the first gas into the gas container. By the cryogenic liquefication respectively solidification of the first gas, problems arising from a mechanical instability caused by high pressures during the supplying step are avoided.

The high pressure within the gas container is established by closing the gas container at a low temperature and letting the gas container warm up to ambient temperatures. Through this provision the gas supply station respectively the connection between the gas supply station and the gas container do not need to be adapted to cope with high pressures in particular high pressures of 300 bar and above.

The thermally insulated filling tube comprises a moveable tube head which may be easily and precisely positioned at the gas container. The thermal insulation of the filling tube reduces evaporation losses and prevents a formation of gas bubbles within the liquefied respectively solidified first gas, which otherwise might affect the precision with which the amount of gas is metered into the gas container.

The determination and the control of the amount of gas that is filled into the gas container may be performed manometrically, volumetrically gravimetrically, and/or by opening time of a valve.

During the supplying step of the first gas the relative positioning between the gas container and the gas supply station may be performed by moving the moveable tube head and not by moving the gas container. In particular when the gas containers are at least partially immersed in a cooling bath, the complexity of a positioning means that moves the gas containers is much higher than the complexity of a positioning device for moving the tube head of the filling tube. The moveable tube head and the filling tube allow for fast connection and disconnection of the gas container.

The first gas may be pure gas or a mixture of gases.

For filling air bag systems the first gas may be an inert gas, in particular a noble gas. Gases used in connection with airbag systems may be argon, oxygen, nitrogen, hydrogen, helium, dinitrogen monoxide (N₂O) as pure gases or mixtures thereof.

For filling high pressure gas container in connection with fuel cells, the first gas may be a fuel gases such as hydrogen.

During the supplying step of the first gas, the gas container may be cooled in particular by a cooling bath. The gas container may also be precooled prior to the supplying step. The cooling bath may comprise a cryogenically liquefied third gas such as liquid nitrogen. The temperature within the cooling bath may be controlled using the pressure in the cooling bath. For instance, the cooling bath may be contained in a closed container and may be pressurized in the range from 1.5 bar to 20 bar. Due to the cooling of the gas container the temperature of the gas container as well as the temperature of the gas content inside of the gas container is well-defined. A tight control of the temperature allows for precise controlling the amount of gas supplied into the gas container.

The pressure values specified herein are on absolute scale and not with respect to ambient pressure.

The first gas may be supplied into the gas container at low temperatures, in particular below 200°K, in particular below 100°K. If the first gas is liquefied, only small amounts of compression heat is generated during the introducing step of the first gas into the gas container such that the degree of efficiency of the filling process is increased. As much less compression heat is generated, the temperature conditions of the filling process are much better defined. Consequently, the amount, of the gases supplied respectively introduced into the gas container may be metered much more precisely.

The liquefied first gas may be introduced into the gas container by completely immersing the gas container into a bath of liquefied first gas such that the first gas enters into the gas container. For this purpose, prior to immersing the gas container, the gas container may be precooled in a separate cooling bath, such as a cooling bath of liquid nitrogen.

The filling tube may be filled using a two-step filling process, in which after the supplying step of the first gas, a gaseous second gas, in particular helium, is introduced into the gas container.

The second gas may be a pure gas or a mixture of at least two gases. The ratio of the gas particles density of the first gas to the gas particles density of the second gas in the filled gas container may range from 1:1 to 100:1, in particular from 5:1 to 10:1.

Advantageously during the supplying step of the first gas, the gas container is cooled, in particular by a cooling bath, and before during the introducing step of the second gas the cooling of the gas container is stopped, in particular the gas container is taken out of the cooling bath.

A stopping of the cooling before the introducing step of the second gas is preferred. In this cases the introducing step of the second gas may be performed separately using conventional gas filling stations operating at pressures below 200 bar, in particular below 100 bar, and at temperatures not as low as 100°K but higher. Furthermore, between the supplying step of the first gas and the introducing step of the second gas the gas container may be transported to a closing unit and may be connected therewith such that immediately after the filling of the gas container with the second gas the gas container may be closed.

The high pressure gas containers may be adapted for airbag systems or for fuel cells. In particular they are destined for being used in connection with airbag systems or in connection with fuel cells. The first gas and/or the second gas may be a mixture of gases.

After closing the gas container, the gas container may be warmed up to ambient temperature, such that a high pressure builds up within the gas container. The pressure within the gas container at 15°C may be in the range from 250 bar to 1300 bar, in particular in the range from 500 bar to 800 bar.

The gas container may be temporarily closed using an auxiliary valve prior to its permanent sealing. The auxiliary valve may be a ball cock, a ball valve, a bibcock, a butterfly valve, a gate valve, a globe valve, check valve, a rotary valve, a piston valve or any other valve that is able to temporarily close the gas container suitably. The final respectively permanent closing of the gas container may be performed by welding.

The process allows for tight metering control also in cases of batching the filling processes for a multitude of gas containers. This is important as the final pressure strongly influences the operating characteristics of the filled gas container in its use.

According to the invention the process of batch filling of high pressure gas containers with gas, wherein multiple gas containers are cooled in parallel, the multiple gas containers are filled sequentially using the process for filling high pressure gas containers according to the invention. The precooling respectively cooling process of multiple gas containers may be performed in parallel and the supplying step of the first gas may be performed one after the other using the flexible filling tube with the moveable tube head.

According to the invention, the arrangement for filling high pressure gas containers with gas comprises a gas supply station and multiple high pressure gas containers, wherein the gas supply station comprises at least one thermally insulated filling tube with a moveable tube head for gas filling of the gas containers. The arrangement may be employed with the process according to the invention. Advantageously it is destined for being employed with the process according to the invention. The arrangement may comprise a positioning device for moving the tube head to the individual gas containers. The fine tuning of the relative position between the gas container and the tube head is performed with the tube head.

Advantageously a metering valve for controlling a gas flow through the filling tube is provided in the tube head. The metering valve is used for precisely controlling the amount of gas supplied into the gas container.

The amount of gas supplied or introduced into the gas container may be controlled volumetrically, gravimetrically or by the opening time of the metering valve. The metering valve may operate in pulses, wherein each pulse corresponds to a well defined amount of gas.

Advantageously the filling tube is at least partially immersed in the cooling bath. The cooling bath helps to cool the filling tube such that the first gas supplied through the filling tube is cooled to a desired temperature in particular to the temperature at which the gas container is kept. The cooling of the filling tube may also prevent a formation of gaseous first gas in the filling tube, which may affect the metering precision negatively.

The arrangement may further comprise a transport mechanism for transporting the gas containers through the gas supply station such that the filling tube with the moveable filling head may be positioned at the gas container and be connected to the gas container cooling bath. With help of the transport mechanism the gas containers may be precooled prior to the supplying step of the first gas and may be transported to the an introducing unit for introducing a second gas or to a closing unit for closing the gas container.

The filling tube may be at least double walled and may comprise an insulation vacuum for thermal insulation. The filling tube may be actively cooled by a cooling medium, in particular by a third gas, which may be cryogenically liquefied. The filling tube may comprise a heat shield in order to reduce a heat transfer from outside to the first gas through thermal radiation. A good insulation of the filling tube is advantageous with respect to avoiding a formation of gas bubbles within the first gas which may deteriorate the precision of metering the right amount of gas into the gas container. The filling tube may comprise a gas channel and a tubular heat shield that is provided at least partially around the gas channel, wherein the heat shield is cooled by the cooling medium. Advantageously the entire tube is shielded.

In a special arrangement the tube head may comprise an auxiliary valve for temporarily closing the gas container. The auxiliary valve may facilitate the supplying step and may reduce the evaporation losses by temporarily closing the gas container shortly after its filling with gas. The permanent closure of the gas container is achieved by closing the gas container permanently for example by welding. The gas container may temporarily be closed after the supplying step of the first gas and before the introducing step of the second gas. The auxiliary valve helps to maintain the amount of gas contained in the gas container constant until the gas container is permanently sealed.

Advantageously the auxiliary valve may be in a fluid series connection with a first valve for permanently closing the gas container. In this case the auxiliary valve may be used for controlling the gas flow, when the first valve is opened. Usually the first valve operates non-reversibly, in particular opens once only, and the auxiliary valve operates reversibly, meaning that it may be reopened and re-closed several times.

The gas filling tube is in particular for filling a liquefied first gas into the gas container. The first gas may be a pure gas or a mixture of gases. The gas supply station may comprise a first container for liquefied first gas.

The gas supply station may comprise an introducing unit for introducing a gaseous second gas into the gas container. The second gas may be a pure gas or a mixture of gases. Advantageously the boiling point of the second gas is higher than the boiling point of the first gas. The gas supply station may comprise a second container for the liquefied second gas. The gas supply station may comprise an evaporator for converting the liquefied second gas into its gaseous state. The second container as well as the evaporator for the liquefied second gas may be advantageous for the cases when storing of the second gas in its liquefied state is more economical than a storing in high pressure gas vessels.

Advantageously the gas supply station comprises a third container for a liquefied third gas as cooling medium such as liquid nitrogen.

According to the invention the gas supply station is adapted for filling high pressure gas containers with gas and for use in the arrangement according to the invention. The gas supply station is in particular destined to be used in the arrangement according to the invention.

Further details and favourable aspects, which may be applied alone or may be combined in any suitable manner, will be explained with respect to the following drawings, which shall not restrict the scope of the present invention but shall schematically and exemplarily illustrate the invention.
- Fig. 1: shows the two-step process according to the invention;
- Fig. 2: shows a high pressure gas container to be used according to the invention shown in cross section;
- Fig. 3: shows further high pressure gas container to be used according to the invention shown in cross section;
- Fig. 4: shows a detailed view of a supplying unit of a filling device according to the invention; and
- Fig. 5: shows a supplying unit of a further embodiment of the filling device according to the invention.

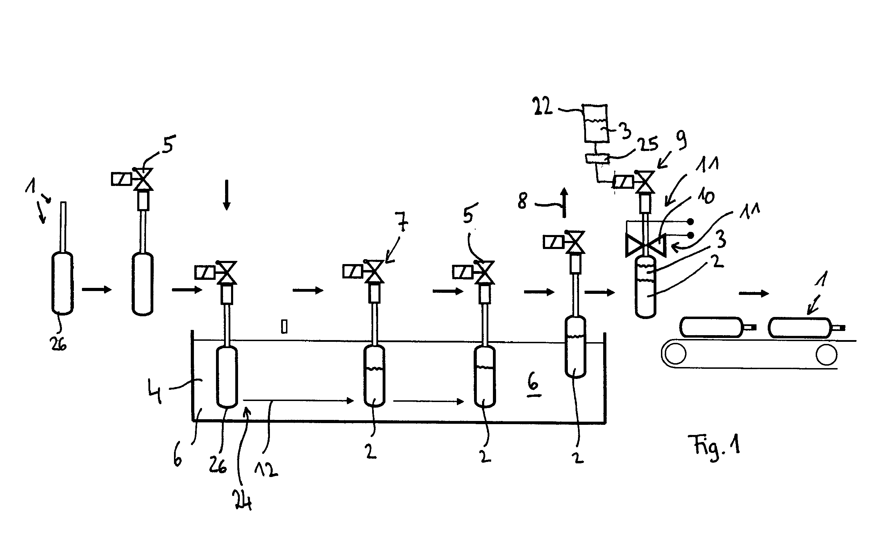

Fig. 1 shows schematically the two-step process for filling a high pressure gas container 1 with a first gas 2 and a second gas 3 using a supplying unit 7 for supplying the first gas 2 into the gas container 1 and an introducing unit 9 for introducing the second gas 3 into the gas container 1. The gas container 1 comprises a container body 26 for receiving the first gas 2 and the second gas 3 and is connected to an auxiliary valve 5. The gas container 1 is connected to a cooling bath 4 which comprises a third gas 6 which is liquefied in order to precool the gas container 1 down to 86°K. The third gas 6 is liquid nitrogen which is kept under a slight pressure in the cooling bath 4 in order to provide for 86°K in the cooling bath 4. This precooling is performed using a precooling unit 24 which at least partially immerses the gas container 1 in the cooling bath 4. The gas container 1 is then transported with a transport mechanism 12 to a supplying unit 7 for supplying liquid argon as first gas 2 into the gas container 1. Then the auxiliary valve 5 is closed in order to diminish evaporation losses of the first gas 2. Subsequently the cooling of the gas container 1 is stopped by disconnecting the gas container 1 from the cooling bath 2 by a stopping unit 8 and is transported to an introducing unit for introducing the second gas 3 in its gaseous state. The second gas 3 such as helium is taken from a second container 22 and is evaporated by an evaporator 25 and is introduced through the auxiliary valve 5. After completion of the introducing the auxiliary valve 5 is temporarily closed until the gas container 1 is permanently closed using a unit 10 for closing the gas container 1. The unit 10 for closing comprises a sealing device 11 which seals the gas container 1 by welding. Both the introducing unit 9 and the unit 10 for closing may be of a conventional type meaning that they do not need to be adapted for cryogenical temperatures and do not need to be capable of coping with high pressures above 300 bar. The second gas 3 is introduced at ambient temperature into the gas container 1. After closing the gas container 1 the gas container 1 are allowed to warm up to ambient temperatures such that the pressure inside of the container body 26 rises to a well-defined pressure around 600 bar. The first gas 2 may be supplied at a pressure ranging from 0,5 bar to 3 bar and the second gas 3 may be introduced at 15 bar. The amount of gas supplied respectively introduced into the gas container 1 may be controlled volumetrically, gravimetrically or by an opening time of a metering valve. The second gas may be metered according to the partial pressure that is eventually desired at room temperature. This metering may be performed outside of the cooling bath 4 for instance in the sealing device 11.

Fig. 2 shows a gas container 1 in cross section to be used according to the invention. The gas container 1 comprises the auxiliary valve 5 in a first connection line 28 to the container body 26 and a first valve 27 in a second connection line 29 to the container body 26. The first valve 27 is provided at the container body 26 before the beginning of the filling process. The first valve 27 is a membrane valve and is adapted to be opened at the instance of operation of the gas container 1 for example during the operation of the airbag system (not shown). The first valve 27 operates non-reversibly, i.e. opens only once. The first valve 27 may be welded to the container body 26 respectively to the second connection line 29. The auxiliary valve 5 is for facilitating the supplying of the first gas 2 respectively the introducing of the second gas 3 into the container body 26. The auxiliary valve 5 is for temporarily closing the container body 26 such that evaporation losses are reduced. After the supplying step of the first gas 2 respectively after the introducing step of the second gas 3, the auxiliary valve 5 is closed. The auxiliary valve 5 may also be closed in between the supplying and the introducing step. Once the container body 26 is completely filled with a gas 2, 3 or with a mixture of gases 2, 3 the first connection line 28 is closed using a sealing portion 31 by welding. The closing portion 31 makes sure that after the closing of the gas container 1, gas may not escape from the container body 26 through the first connection line 28. The sealing portion 31 allows for using inexpensive auxiliary valves 5 without limiting the advantages of temporarily closing the container body 26.

Fig. 3 shows a further gas container 1 in cross section to be used according to the invention, wherein the first valve 27 and the auxiliary valve 5 are in a fluid series connection 30. In this case the permanent closing of the container body 26 is realized by the first valve 27 which is closed after the filling of the container body 26 with a gas 2, 3 or a mixture of gases 2, 3. The auxiliary valve 5 is used for facilitating the supplying of the first gas and/or the introducing of the second gas 3.

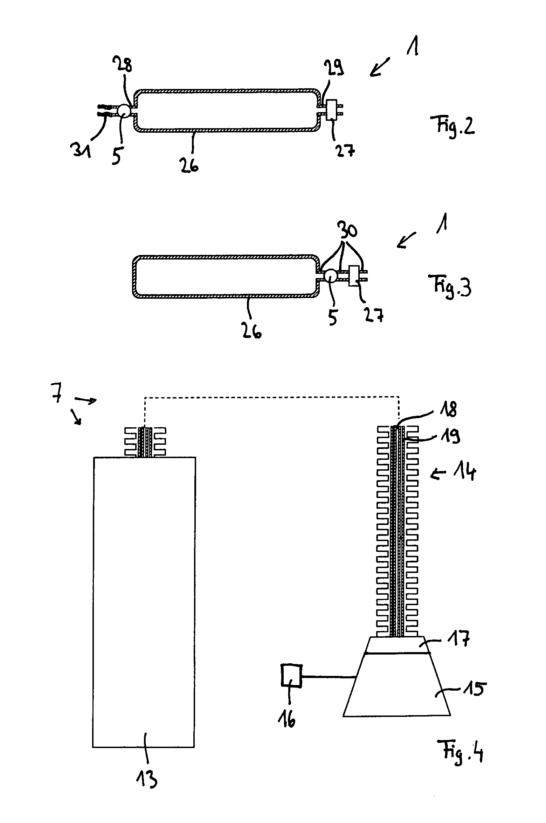

Fig. 4 shows schematically the supplying unit 7 comprising a gas supply station 13 with a flexible filling tube 14 which is to be connected to the container 1. For connecting the filling tube 14 with the gas container 1, a tube head 15 is provided which comprises a metering valve 17. The tube head 15 is positioned at the gas container 1 with a positioning device 16. Due to the flexibility of the filling tube 14 a gas tight connection between the gas supply station 13, respectively the supplying unit 7, and the gas container 1 is established in a short time. The filling tube 14 is thermally isolated and comprises a gas channel 18 for supplying the first gas 2 into the gas container 1. The gas channel 18 is isolated by means of an insulation vacuum. For this purpose the filling tube 14 is doubled walled. For further reducing a heat transfer through radiation within the insulation vacuum a heat shield 19 is introduced, which is at least partially actively cooled. The moveable tube head 15 allows for a fast connection which is important if a multiplicity of gas containers 1 need to be filled.

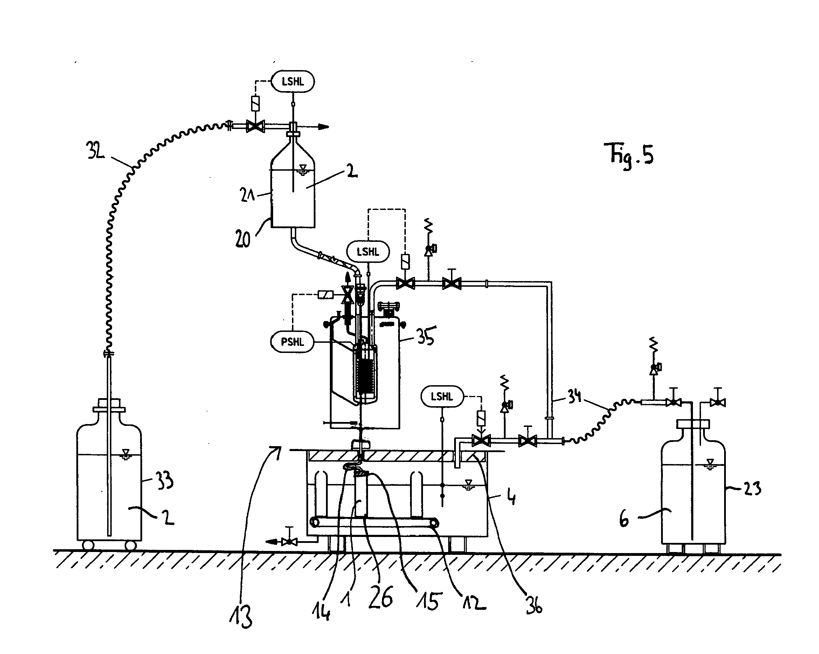

Fig. 5 shows a further embodiment of a supplying unit 7 of the device for filling gas containers 1. Liquid argon is stored as first gas 2 in a large supply tank 33 and is supplied through a supply tube 32 into a first container 21 which also serves as phase separator 20. The liquid argon from the phase separator 20 is precooled in a second precooling unit 35 for precooling the second gas 2. The liquid argon is cooled to 2°K below its boiling point in order to avoid any formation of gas bubbles within the liquid phase, which might affect the metering precision of the amount of gas supplied into the gas container 1. The second precooling unit 35 uses liquid nitrogen as third gas 6 from a third container 23 which is connected to the second precooling unit 35 with conduits 34. The precooled liquid argon is then supplied with the filling tube 14 to the gas container 1. For this purpose the filling tube 14 comprises a moveable tube head 15 which may be positioned precisely at the gas container 1. The gas container 1 is transported through the cooling bath by a transport mechanism 12. The cooling bath 4 is closed with a cover 36 in order to establish a pressure in the cooling bath 4 with which the temperature in the cooling bath is precisely controlled.

In the following, further aspects, which are related to the present invention, are described. These individual aspects may be employed individually and separately or in any suitable combination with each other respectively one another:

An advantageous high pressure gas container 1 with a container body 26 for storing gas and at least one first valve 27 for discharging the stored gas, is characterized by further comprising an auxiliary valve 5 for introducing the gas into the container body 26 and for temporarily closing the container body 26 until the container body 26 is sealed permanently, wherein the first valve 27 and the auxiliary valve 5 are in fluid connection with the container body 26, wherein in particular the first valve 27 and the auxiliary valve 5 may be connected to the container body 26 with separate fluid connection lines 28, 29, or, wherein in particular the first valve 27 and the auxiliary valve 5 may be connected to the container body 26 in a fluid series connection 30. The first valve 27 may be non-reversibly openable. Alternatively, the auxiliary valve 5 may be reversibly openable and closable. A sealing portion 31 may be provided at the auxiliary valve 5 for permanently closing the auxiliary valve 5, wherein in particular the sealing portion 31 may be provided in the fluid connection between the auxiliary valve 5 and the container body 26, or, wherein in particular the auxiliary valve 5 may be provided in the fluid interconnection between the sealing portion 31 and the container body 26. The auxiliary valve 5 may be one of the following valves: a ball cock, a ball valve, a bibcock, a butterfly valve, a gate valve, a globe valve, a check valve, a rotary valve, or a piston valve. The first valve 27 may in particular be a membrane valve. Advantageously, the high pressure gas container 1 may be adapted and/or destined for an air bag system, or, the high pressure gas container 1 may be adapted and/or destined for a fuel cell.

An advantageous process for filling a high pressure gas container 1 having a container body 26 for storing gas, at least one first valve 27 for discharging the stored gas and an auxiliary valve 5, wherein the first valve 27 and the auxiliary valve 5 are in fluid connection with the container body 26, comprises the following steps:

The gas is introduced into the container body 26 through the auxiliary valve 5; the auxiliary valve 5 is at least temporarily closed; the auxiliary valve 5 is sealed permanently, wherein in particular the auxiliary valve 5 may be sealed by welding. The auxiliary valve 5 may also or instead be sealed by the first valve 27. Prior to filling the container body 26 with gas, the first valve 27 may be provided and may be configured at the gas container 1.

An advantageous process for filling a high pressure gas container 1, comprises the following steps: Supplying a liquefied or solidified first gas 2 into a gas container 1 while the gas container 1 is being cooled; stopping the cooling of the gas container 1 after the supplying step of the first gas; then introducing a gaseous second gas 3 into the gas container 1; closing the gas container 1, wherein in particular the cooling of the gas container 1 may be performed in a cooling bath 4, in particular a cooling bath 4 of liquid nitrogen, and the cooling is stopped by disconnecting the gas container 1 from the cooling bath 4. The first gas 2 and / or the second gas 3 may be a mixture of plural gases. The first gas 2 and / or the second gas 3 may be an inert gas, in particular a noble gas. After the supplying step of the first gas 2 and before the introducing step of the second gas 3 the gas container 1 may be temporarily closed. The gas container 1 is in particular temporarily closed using an auxiliary valve 5. The closing of the gas container 1 may be performed by welding. The gas containers 1 are in particular for air bag systems or for fuel cells. The supplying of the first gas 2 may be performed at a pressure in the range from 0,2 bar to 15 bar , in particular in the range from 0,5 bar to 4 bar. The supplying of the second gas 3 may be performed at a pressure in the range from 2 bar to 100 bar, in particular, in the range from 5 bar to 50 bar, for example in the range from 10 bar to 20 bar. The first gas 2 may be supplied in a liquid state into the gas container 1 and solidifies in the gas container 1. The first gas 2 may be supplied at a temperature lower than its boiling temperature, in particular at least 1°K, preferably at least 2°K, lower than its boiling temperature, and at a temperature higher than its freezing temperature, in particular at least 1°K, preferably at least 2° K, higher than its freezing temperature. After the supplying step of the first gas 2 and before the introducing step of the second gas 3, the gas container 1 may be connected to a sealing device 11, in particular a welding apparatus 12, and after the introducing step of the second gas 3 the gas container 1 may be sealed by the sealing device 11, in particular by welding. The cooling is in particular performed using a liquefied third gas 6, in particular liquid nitrogen, wherein in particular the temperature of the third gas 6 may be controlled by controlling the pressure in the third gas 6. The gas container 1 may be cooled before the supplying step of the first gas 2.

An advantageous device for filling high pressure gas containers 1, comprises: A supplying unit 7 for supplying a liquefied or solidified first gas 2 into a gas container 1 while the gas container 1 is being cooled; a stopping unit 8 for stopping the cooling of the gas container 1; an introducing unit 9 for introducing a gaseous second gas 3 into the gas container 1 after the supplying step of the first gas; a unit 10 for closing the gas container 1, wherein in particular the device further comprises a cooling bath 4 for cooling the gas container 1, wherein in particular the device further comprises a transport mechanism 12 for transporting the gas containers 1 through the cooling bath 4. The unit 10 for closing the gas container 1 may be a welding apparatus 12. The device is in particular for filling high pressure gas containers 1 for air bag systems or for fuel cells. The device in particular further comprises a gas supply station 13 and at least one thermally insulated filling tube 14 with a tube head 15 that is in fluid connection with the gas supply station 13, wherein the filling tube 14 is for supplying the first gas 2 to the gas containers 1, wherein the device in particular further comprises a positioning device 16 for positioning the tube head 15 at the gas containers 1.

The invention concerns a process, an arrangement and a gas supply station for filling high pressure gas containers comprising supplying a liquefied or solidified first gas 2 from a gas supply station 13 through a thermally isolated filling tube 14 with a moveable tube head 15 to the high pressure gas container 1; as well as a process of batch filling of high pressure gas containers 1 with gas, wherein multiple gas containers 1 are cooled in parallel, which are filled sequentially using the process according to the invention. The invention allows for fast, economical, reliable, reproducible and precise filling of high pressure gas containers, wherein a number of the known conventional devices that are not particularly suited for high pressure respectively low temperature appliances may still be used.

### Reference numerals

- 1: gas container
- 2: first gas
- 3: second gas
- 4: cooling bath
- 5: auxiliary valve
- 6: third gas
- 7: supplying unit
- 8: stopping unit
- 9: introducing unit
- 10: unit for closing
- 11: sealing device
- 12: transport mechanism
- 13: gas supply station
- 14: filling tube
- 15: tube head
- 16: positioning device
- 17: metering valve
- 18: gas channel
- 19: heat shield
- 20: phase separator
- 21: first container
- 22: second container
- 23: third container
- 24: precooling unit
- 25: evaporator
- 26: container body
- 27: first valve
- 28: first connection line
- 29: second connection line
- 30: fluid series connection
- 31: sealing portion
- 32: supply tube
- 33: supply tank
- 34: conduits
- 35: second precooling unit
- 36: cover

## Claims

1. Process for filling high pressure gas containers (1), comprising supplying a liquefied or solidified first gas (2) from a gas supply station (13) through a thermally insulated filling tube (14) with a movable tube head (15) to the high pressure gas container (1).

2. Process according to claim 1, **characterized in that** during the supplying step of the first gas (2), the gas container (1) is cooled, in particular by a cooling bath (4).

3. Process according to claim 2, **characterized in that** the filling tube (14) is cooled at least partially along its length, in particular by the cooling bath (4).

4. Process according to one of the preceding claims 1 to 3, **characterized in that** the filling tube (14) is filled using a two step filling process, in which after the supplying step of the first gas (2), a gaseous second gas (3), in particular Helium, is introduced into the gas container (1).

5. Process according to claim 4, **characterized in that** during the supplying step of the first gas (2), the gas container (1) is cooled, in particular by a cooling bath (4), and before or during the introducing step of the second gas (3) the cooling of the gas container (1) is stopped, in particular the gas container (1) is taken out of the cooling bath (4).

6. Process according to one of the preceding claims, **characterized in that** high pressure gas containers (1) for air bag systems or for fuel cells are filled.

7. Process according to one of the preceding claims, **characterized in that** the first gas (2) and /or the second gas (3) is a mixture of gases.

8. Process of batch filling of high pressure gas containers (1) with gas, wherein multiple gas containers (1) are cooled in parallel, which are filled sequentially using the process according to one of claims 1 to 7.

9. Arrangement for filling high pressure gas containers (1) with gas comprising a gas supply station (13) and multiple high pressure gas containers (1), wherein the gas supply station (13) comprises at least one thermally insulated filling tube (14) with a movable tube head (15) for gas filling of the gas containers (1).

10. Arrangement according to claim 9, further comprising a positioning device (16) for moving the tube head (15) to the individual gas containers (1).

11. Arrangement according to claim 9 or 10, **characterized in that** a metering valve (17) for controlling a gas flow through the filling tube (14) is provided in the tube head (15).

12. Arrangement according to one of claims 9 to 11, **characterized in that** the gas supply station (13) comprises a cooling bath (4) for cooling the gas containers (1).

13. Arrangement according to claim 12, **characterized in that** the filling tube (14) is at least partially immersed in the cooling bath (4).

14. Arrangement according to claim 13, further comprising a transport mechanism (12) for transporting the gas containers (1) through the cooling bath (4).

15. Arrangement according to one of claims 9 to 14, **characterized in that** the filling tube (14) is at least doubled walled and comprises an insulation vacuum for thermal insulation.

16. Arrangement according to one of claims 9 to 15, **characterized in that** the filling tube (14) is actively cooled by a cooling medium, in particular a liquefied third gas (6).

17. Arrangement according to claim 16, **characterized in that** the filling tube (14) comprises a gas channel (18) and a tubular heat shield (19) at least partially around the gas channel (18), wherein the heat shield (19) is cooled by the cooling medium.

18. Arrangement according to one of claims 9 to 17, **characterized in that** the tube head (15) comprises an auxiliary valve (5) for temporarily closing the gas container (1).

19. Arrangement according to one of claims 9 to 18, **characterized in that** the gas filling tube (14) is for filling a liquefied first gas (2) into the gas containers (1).

20. Arrangement according to one of claims 9 to 19, **characterized in that** the gas supply station (13) comprises a first container (21) for a liquefied first gas (2).

21. Arrangement according to one of claims 9 to 20, **characterized in that** the gas supply station (13) comprises an introducing unit (9) for introducing a gaseous second gas (3) into the gas container (1).

22. Arrangement according to one of claims 9 to 21, **characterized in that** the gas supply station (13) comprises a second container (22) for a liquefied second gas (3).

23. Arrangement according to claim 22, **characterized in that** the gas supply station (13) comprises an evaporator (25) for converting the liquefied second gas (3) into its gaseous state.

24. Arrangement according to one of claims 9 to 23, **characterized in that** the gas supply station (13) comprises a third container (23) for a cryogenically liquefied third gas (6) as cooling medium.

25. Gas supply station (13) for filling high pressure gas containers (1) with gas for use in the arrangement according to one of claims 9 to 24.
